(19) Europäisches Patentamt
European Patent Office
Office européen des brevets

(11) Numéro de publication: **0 120 172**
**B1**

(12) # FASCICULE DE BREVET EUROPÉEN

(45) Date de publication du fascicule du brevet: 03.02.88

(51) Int. Cl.⁴: G 06 F 13/36, H 04 L 25/52, G 06 F 13/42

(21) Numéro de dépôt: 83430013.9

(22) Date de dépôt: 29.03.83

(54) **Dispositif d'interface de bus pour un système de traitement de données.**

(43) Date de publication de la demande:
03.10.84 Bulletin 84/40

(45) Mention de la délivrance du brevet:
03.02.88 Bulletin 88/5

(84) Etats contractants désignés:
DE FR GB

(56) Documents cité:
US-A-4 035 777

ELECTRO 76 PROFESSIONAL PROGRAM, no. 1976, 1976, pages 1-6, session 20-2, New York, USA T. McMULLEN et al.: "Using digital techniques for improved weak signal reception"
PATENTS ABSTRACTS OF JAPAN, vol. 6, no. 30 (P-103) (908), 23 février 1982
PATENTS ABSTRACTS, vol. 6, no. 53 (P-109) (931), 8 avril 1982

(73) Titulaire: International Business Machines Corporation, Old Orchard Road, Armonk, N.Y. 10504 (US)
(84) Etats contractants désignés: DE GB

(73) Titulaire: Compagnie IBM FRANCE, 5 Place Vendôme, F-75000 Paris 1er (FR)
(84) Etats contractants désignés: FR

(72) Inventeur: Riso, Vladimir, 19, avenue Guy de Maupassant, F-06100 Nice (FR)
Inventeur: Kuhne, Roland, Voie Pénétrante, F-06480 La Colle sur Loup (FR)

(74) Mandataire: Lattard, Nicole, Compagnie IBM France Département de Propriété Intellectuelle, F-06610 La Gaude (FR)

EP 0 120 172 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

## Description

### Domaine technique

La présente invention concerne un circuit d'interface de bus destiné à un système de traitement de données dans lequel 2 M unités de traitement de données sont connectées à un système de commande central par un bus comportant M fils réservés à l'échange de bits entre les unités de traitement et le système de commande central, et plus particulièrement un circuit d'interface permettant à la fois de recevoir et de resynchroniser les bits reçus et d'identifier quelles unités ont fait une demande d'accès au bus.

### Art antérieur

Généralement, dans les systèmes de traitement de données, des unités de traitement de données sont connectées à un système de commande central par un bus sur lequel peuvent être transmis des multiplets de bits du système de commande central aux unités et des unités au système de commande central. Ces multiplets comportent un nombre M de bits et en conséquence le bus doit comporter M fils pour le transfert des M bits du système de commande central aux unités et M fils pour le transfert des M bits des unités au système de commande central.

Dans certains systèmes, les bits transmis sur chacun des fils sont représentés par un niveau de tension haut ou bas à l'intérieur d'une période de temps t, codage type NRZ. Le type de codage est simple mais nécessite des moyens de resynchronisation pour récupérer les bits à la réception.

Dans un tel environnement, il est nécessaire de prévoir dans le système de commande central un dispositif d'interface qui soit capable de resynchroniser les bits reçus des unités de traitement de données, et aussi de reconnaître quelles unités ont fait des demandes d'accès au bus.

De plus, dans chaque unité il faut un dispositif d'interface de bus pour resynchroniser les bits reçus par l'unité du système de commande central. Le document Electro 76 Professional program No. 1976 page 6 session 20.2 New York USA T. Mc Mullen, décrit un circuit pouvant être utilisé dans un environnement asynchrone, qui ne s'applique pas pour recevoir des bits transmis de façon synchrone, à haute vitesse.

Lorsqu'une unité fait une demande d'accès au bus, elle envoie un bit de demande sur un des fils du bus qui lui est affecté par exemple, l'unité 0 envoie un bit sur le fil 0 du bus, l'unité 1 sur le fil 1, etc... En conséquence, plus le nombre d'unités est grand, plus il faut un grand nombre de fils pour que chaque unité puisse envoyer son bit de demande, ou il faut uutiliser un protocole d'échange sur le bus plus compliqué, par exemple en codant les demandes sur plusieurs fils (compte tenu d'un algorithme pour éviter les contentions). De tels dispositifs sont connus des brevets japonais A-56 149 630 et 56 168 256.

Augmenter le nombre de fils du bus présente l'inconvénient d'augmenter le coût du système et d'en compliquer l'assemblage. En effet, à l'heure actuelle, où les circuits sont miniaturisés, l'encombrement dû aux câbles et aux broches d'entrée/sortie des différents circuits pose des problèmes pour l'assemblage des machines. De plus, plus le nombre de fils est grand plus il est difficile d'avoir les mêmes performances (impédance et temps de propagation) sur chaque fil, compliquer le protocole d'échange nécessite des circuits de décodage et de prise de décision pour savoir quelle unité doit parler, ce qui prend du temps.

### Résumé de l'invention

En conséquence, un objet de la présente invention est de réaliser un dispositif d'interface de bus qui soit simple, et qui permette de resynchroniser les bits reçus et d'identifier en un seul cycle quelles unités parmi 2 M unités font des demandes d'accès au bus même lorsque le bus ne comporte que M fils réservés au transfert des bits d'information.

Un autre objet est de réaliser un tel dispositif d'interface qui permette d'échanger des bits d'information à vitesse élevée.

La présente invention concerne un dispositif d'interface de bus destiné à un système de traitement de données dans lequel 2 M unités de traitement de données sont connectées à un système de commande central par un bus comportant au moins M fils affectés à l'échange de bits d'information entre le système de commande central et les unités de traitement.

Dans un tel ensemble, le dispositif d'interface de bus placé dans les unités pour recevoir les multiplets de bit du système de commande central ou dans le système de commande central pour recevoir les multiplets de bits venant des unités, comprend au moins M circuits de réception, un circuit étant associé à chaque fil du bus pour resynchroniser et mettre en forme les bits arrivant sur chacun des fils, les bits étant représentés par un niveau de tension haut ou bas à l'intérieur de chaque période de bits t.

Chaque circuit de réception comprend une première et une seconde bascule. La première bascule reçoit sur une entrée de données le train de bits arrivant du bus et a une sortie qui prend le niveau du train de bits d'entrée au front montant d'un premier signal d'horloge de période égale à deux fois la période de bit, ladite bascule étant restaurée au front descendant dudit premier signal d'horloge. La seconde bascule reçoit sur une entrée de données le train de bits arrivant du bus et a une sortie qui prend le niveau du train de bits d'entrée au front descendant du premier signal d'horloge, ladite bascule étant restaurée au front montant dudit signal d'horloge.

Les sorties des deux bascules sont sommées dans un circuit OU qui fournit en sortie le train de bits resynchronisées qui pourra être utilisé par les circuits des unités de traitement de données ou du système de commande central.

Dans un tel ensemble, les unités sont réparties en un premier et un second groupe de M unités, chacune des M unités du premier groupe envoyant ses bits de demande d'accès au bus, lorsque ledit bus est libre, sur un des M fils du bus pendant une première phase d'un second signal d'horloge de même période que le premier signal d'horloge et déphasé de $\pi/2$ par rapport à ce signal et chacune des M unités du second groupe envoyant ses bits de demande d'accès au bus, lorsque ledit bus est libre, sur un des M fils du bus pendant la seconde phase dudit second signal d'horloge. Dans chacun des circuits de réception du dispositif d'interface de bus du système de commande central associé à un des M fils du bus, une troisième bascule a une entrée connectée à la sortie de la première bascule pour en mémoriser l'état lorsque le bus est libre et fournir en sortie le bit de demande d'accès de l'unité associée du premier groupe et une quatrième bascule a une entrée connectée à la sortie de la seconde bascule pour en mémoriser l'état lorsque le bus est libre et fournir en sortie le bit de demande d'accès au bus de l'unité associée du second groupe.

**Brève description des figures**

La figure 1 représente le schéma d'un ensemble de traitement de données dans lequel les dispositifs d'interface de bus de la présente invention peuvent être utilisés.

La figure 2 représente un diagramme des trains de bits arrivant aux dispositifs d'interface, et des signaux obtenus dans ledit dispositif.

La figure 3 représente un circuit de réception constituant les dispositifs d'interface.

La figure 4 représente un ensemble de M circuits de réception constituant le dispositif d'interface 8 connecté aux M fils du bus réservé aux bits d'information.

La figure 5 représente le diagramme des temps des signaux nécessaires dans le circuit de la figure 4 pour l'identification des demandes d'accès au bus.

**Description détaillée de l'invention**

Comme représenté sur la figure 1, le dispositif d'interface de bus de l'invention peut être utilisé dans un arrangement où 2 M unités U-i (avec $0 \leqslant i \leqslant 2M-1$) sont connectés à un système de commande central CCU 1, qui peut être une unité de traitement centrale ou un contrôleur de communications, par un bus commun 2.

Dans le mode de réalisation qui sera décrit 2 M sera supposé égal à 16, mais le principe de la présente invention peut être utilisé dans des ensembles plus grands ou plus petits.

Le système de commande CCU envoie des bits d'information aux unités U-i par les fils du bus 2-E et reçoit des bits d'information des unités U-i par les fils du bus 2-S.

Parmi les fils du bus 2, M fils, soit 8 fils DO à D7 sont réservés aux bits de données ou de contrôle constituant un octet, un fil est réservé au bit de parité P de l'octet et un fil est réservé à un bit de contrôle C dont la valeur indique que les bits sur les fils DO à D7 sont des bits de données ou des bits de contrôle.

Une horloge 3 dans l'unité CCU 1 envoie sur les lignes 4 et 5 deux trains d'impulsions d'horloge CLK1 ét CLK2 dont la période est égale à deux fois la période de bit, les deux trains CLK1 et CLK2 étant déphasés de $\pi/2$. Ces trains sont représentés sur la figure 5.

Les éléments des unités U-0 à U-15 seront référencés par un numéro suivi par un suffixe i correspondant à l'unité dans laquelle ils sont situés.

Chacune des unités U-i comporte des circuits de réception 6-i constituant un circuit d'interface de bus conforme à l'invention qui reçoivent les bits sur les fils du bus 2-E, les remettent en forme et les resynchronisent, comme cela sera décrit en référence à la figure 2.

Les bits d'entrée DO-E à D7-E, P-E et C-E reconstitués par les circuits 6-i sont utilisés par les circuits de traitement 7-i de l'unité de traitement conformément à l'application envisagée.

Les bits de sortie DO-S à D7-S, P-S et C-S qu'une unité U-i a à envoyer au système de commande centrale CCU-1, par les fils du bus 2-S générés par les circuits logiques de traitement 7-i, sont reçus par un dispositif d'interface de bus 8, dans le système CCU-1, circuits qui fonctionnent suivant le même principe que les circuits 6-i et qui reçoivent le signal d'horloge CLK1 de la ligne 4.

De plus, ce dispositif d'interface permet de reconnaître quelles unités U-i ont fait une demande d'accès au bus. En conséquence, le dispositif d'interface 8 comporte pour la réception des bits C et P des circuits identiques aux circuits de réception 6-i et des circuits qui sont connectés aux fils du bus 2-8 DO à D7 pour resynchroniser les bits reçus des unités U-i sur ces fils, et fournir en sortie les bits DO à D7 reçus et pour fournir sur 16 sorties 9-0 à 9-15 un signal qui indique que l'unité correspondante U-0 à U-15 a fait une demande d'accès au bus.

Les sorties 9-0 à 9-15 sont connectées à un circuit d'arbitrage 10 qui permet de sélectionner une demande pour qu'elle soit servie ainsi qu'il est classique dans tous les arrangements partageant des ressources communes.

Les circuits de réception 8 conformes à l'invention permettent d'économiser des fils. En effet dans un système classique, une unité U-i qui fait une demande rend actif un des fils du bus. Dans le mode de réalisation préféré, étant donné qu'il y a 16 unités, il faudrait 16 fils DO à D15 dans le bus 2-S, un fil étant affecté à chaque unité.

Conformément à l'invention, les unités sont réparties en deux groupes, par exemple les unités de numéros pairs 0 à 14 forment le groupe 0 et les unités de numéros impairs 1 à 15 forment le groupe 1.

Chaque unité U-i qui fait une demande génère un signal de demande sur la ligne 11-i. Ce signal est appliqué à l'entrée D d'une bascule type D 12-i.

L'entrée d'horloge C des bascules 12-i dans les unités du groupe 0 reçoit le signal d'horloge CLK2 et l'entrée d'horloge C des bascules 12-i dans les unités du groupe 1 reçoit l'inverse du signal d'horloge CLK2 fourni par les inverseurs 15-i.

Lorsque le système est dans un état libre, c'est-à-dire qu'aucun transfert de bit n'a lieu sur les fils des bus 2-S, les états des sorties des bascules de demande sont appliqués aux fils du bus 2-S par des portes ET 13-i conditionnées par le signal LIBRE généré sur les lignes 14-i. Dans le mode de réalisation préféré, les demandes des premières unités U-0 et U-1 de chacun des groupes sont appliquées par les portes ET 13-0 et 13-1 aux fils DO-S, les demandes des secondes unités U-2 et U-3 de chacun des groupes sont appliquées par les portes ET 13-2 et 13-3 au fil D1-8, etc... et les demandes des dernières unités U-14 et U-15 sont appliquées au fil D7-S.

Les signaux d'horloge CLK1 et CLK2 sont déphasés de $\pi/2$ et les demandes des unités du proupe 0 seront placées sur les fils DO à D7 pendant une des phases du signal d'horloge CLK2, par exemple lorsque CLK2 est au niveau haut dans le mode de réalisation préféré, et les demandes des unités du groupe 1 seront placées sur ces mêmes fils pendant l'autre phase du signal CLK2, c'est-à-dire CLK2 au niveau bas dans le mode de réalisation représenté.

Sur la figure 2 sont représentés en A, les bits de données ou de contrôle reçus par les dispositifs d'interface 6-i et 8, pour être resynchronisés. Ces bits ont un niveau haut ou bas à l'intérieur de chaque période de bit t, pour représenter une information binaire 1 ou 0. On a ainsi représenté les signaux d'horloge CLK1 et $\overline{CLK1}$ qui sont utilisés pour la resynchronisation des bits dans les dispositifs d'interface et les signaux X et Y générés dans les dispositifs d'interface. B représente les bits obtenus sur chaque sortie des circuits constituant le dispositif d'interface.

On va maintenant décrire en référence à la figure 3 un des circuits de réception d'un dispositif d'interface 6-i associé à un des fils du bus 2-E pour resynchroniser les bits de la forme A reçus de ce fil. Il est bien entendu que dans le dispositif 6-i il y a un tel circuit par fil. Deux circuits identiques sont utilisés pour la réception des bits de contrôle et de parité C et P dans le dispositif d'interface 8.

Chaque circuit de réception de bits comporte deux bascules TX 30 et TY 31, qui reçoivent sur leur entrée de données un train de bits de forme A. La bascule 30 a deux entrées d'horloge, la première 32 reçoit le signal d'horloge CLK1 et la seconde 33 reçoit l'inverse de ce signal $\overline{CLK1}$ fourni par la bascule 34.

La bascule 31 a, elle aussi, deux entrées d'horloge, la première 35 reçoit l'inverse du signal d'horloge CLK1 fourni par l'inverseur 34 et la seconde 36 reçoit le signal d'horloge CLK1.

Les deux bascules prennent l'état du signal d'entrée A, au front montant du signal d'horloge sur leurs entrées d'horloge 32 et 35 et elles sont restaurées, sorties au niveau bas dans un mode de réalisation préféré, par le front montant du signal d'horloge sur leurs entrées 33 et 36.

Comme représenté en A sur la figure 2, les bits reçus par chaque circuit de réception sont codés en code NRZ, c'est-àdire qu'ils sont à un niveau haut ou bas pour représenter l'état 1 ou 0 pendant un temps égal à une demi période de signal d'horloge CLK1.

En conséquence, la bascule TX 30 prendra l'état (niveau haut ou bas) des bits d'entrée au front montant du signal d'horloge CLK1 et sera restaurée au front descendant de ce signal. La sortie de la bascule TX 30 est représentée en X sur la figure 2.

La bascule TY 31 prendra l'état (niveau haut ou bas) des bits d'entrée au front montant du signal d'horloge $\overline{CLK1}$ et sera restaurée au front descendant de ce signal. La sortie de la bascule TY 31 est représentée en Y sur la figure 2.

Dans l'exemple représenté, X est au niveau haut pendant la demi-période 7 et Y est au niveau haut pendant les demipériodes 2 et 6.

En sommant les sorties X et Y des bascules 30 et 31 dans le circuit OU 37, on retrouve la configuration des bits B sur la ligne de sortie BITS RECUS.

On va maintenant décrire en référence à la figure 4 les circuits du dispositif d'interface 8 qui permettent de retrouver les bits émis par les unités sur les fils DO à D7 du bus 2-6 et d'identifier les unités faisant des demandes d'accès au bus.

Pour chaque fil DO à D7 du bus 2-S, deux bascules TX et TY 40-0 et 41-1 à 40-7 et 41-7 et un circuit OU 47-0 à 47-7 sont disposés comme les bascules 30 et 31 et le circuit OU 37 de la figure 3 et fonctionnent de la même façon. Les bascules reçoivent comme entrée d'horloge les signaux d'horloge CLK1 sur les entrées 42 et 46 (ayant la même fonction que 32 et 36 de la figure 3) et l'inverse des signaux d'horloge fourni par l'inverseur 44 sur les entrées 43 et 45 (ayant les mêmes fonctions que 33 et 35 de la figure 3).

De la même façon que précédemment décrit en référence à la figure 3, les circuits OU 47-0 à 47-7 fournissent les bits DO à D7 reçus par le système de commande central CCU-1 pour y être traités.

De plus, chacune des entrées DO à D7 reçoit les bits de demande d'accès au bus faites par les différentes unités comme décrit en référence à la figure 1.

Les unités du groupe 0 peuvent placer leurs demandes sur les fils DO à D7 pendant les phases 0, 2, 4, 6, 8 et 10 lorsque le signal CLK2 est au niveau haut, et les unités du groupe 1 peuvent placer leurs demandes sur ces mêmes fils pendant les phases 1, 3, 5, 7 et 9 lorsque le signal CLK2 est au niveau bas, comme représenté sur la figure 5.

En conséquence, en supposant qu'il y ait une demande sur une ou plusieurs des entrées DO à D7 du bus 2-S pendant les phases 2 et 8, les bascules 40-0 à 40-7 dont l'entrée sera au niveau haut basculeront au front montant de CLK1 et fourniront un signal de sortie au niveau haut.

Les sorties des bascules 40-0 à 40-7 sont connectées aux entrées des bascules 48-0 à 48-7 qui mémorisent l'état des sorties des bascules 40-0 à 40-7 quand le bus est libre et donc que l'état des bits de demandes peut être pris en considération par le circuit d'arbitrage 10.

Les lignes de sortie des bascules 48-0 à 48-7 constituent les lignes 9-0, 9-2 à 9-14 de la figure 1 et un signal au niveau haut sur ces lignes indique que les unités correspondantes du groupe 0 ont fait une demande d'accès au bus.

En supposant qu'il y ait une demande sur une ou plusieurs entrées DO à D7 pendant les phases 5 et 9 o) CLK2 est au niveau bas comme représenté sur la figure 5, les bascules 41-0 à 41-7 dont l'entrée sera haute, basculeront au front montant de CLK1 et donc fourniront un signal de sortie de niveau haut.

Les sorties de ces bascules sont connectées aux entrées des bascules 49-0 à 49-7 qui mémorisent l'état des sorties des bascules 41-0 à 41-7 quand le bus est libre.

Les lignes de sortie des bascules 49-0 à 49-7 constituent les lignes 9-1, 9-3 à 9-15 et un signal au niveau haut sur ces lignes indique que les unités correspondantes du groupe 1 ont fait une demande d'accès au bus.

## Revendications

1. Dispositif d'interface pour un système de traitement de données dans lequel 2M unités de traitement de données peuvent avoir accès à un bus de sortie en faisant des demandes d'accès au bus, pour être connectées à un système de traitment central par le bus de sortie qui comporte au moins M fils affectés à l'envoi de multiplets de bits d'information entre les unités de traitement de données et le système de commande central et dans lequel les 2M unités de traitement de données sont connectées au système de traitement central par un bus d'entrée comportant au moins M fils pour recevoir dudit système des multiplets de bits d'information, les bits d'information étant transportés sur les fils de façon synchrone, et représentés par un niveau haut ou bas à l'intérieur de chaque période de bit, ledit dispositif étant caractérisé en ce que :

chaque unité comprend un circuit de réception connecté à chaque fil du bus d'entrée pour recevoir les bits du système de commande central et le système de commande central comprend au moins M circuits de réception chacun étant connecté à un bus de sortie pour recevoir les bits des unités de traitement de données; et en ce que chaque circuit de réception comprend :

une première bascule (TX30) recevant sur une entrée de donné es le train de bits arrivant du bus et ayant une sortie qui prend le niveau du train de bits d'entrée au front montant d'un premier signal d'horloge (CLK1) de période égale à deux fois la période de bit, ladite bascule étant restaurée au front descendant dudit premier signal d'horloge et une seconde bascule (TY31) recevant sur une entrée de données le train de bits arrivant du bus et ayant une sortie qui prend le niveau du train de bits d'entrée au front descendant du premier signal d'horloge (CLK1), ladite bascule étant restaurée au front montant dudit signal d'horloge, un circuit OU (37) dont les entrées sont connectées aux sorties des première et seconde bascules et fournissant en sortie le train de bits qui peuvent être traités dans les unités ou dans le système de commande central.

2. Dispositif d'interface de bus selon la revendication 1 caractérisé en ce que, lesdites unités (U-i) sont réparties en un premier et second groupes (Groupes 0 et 1) de M unités, chacune des M unités du premier groupe envoyant ses bits de demande d'accès au bus, lorsque ledit bus est libre sur un des M fils du bus pendant une première phase d'un second signal d'horloge (CLK2) de même période que le premier signal d'horloge et déphasé de $\pi/2$ par rapport à ce signal (CLK1) et chacune des M unités du second groupe envoyant ses bits de demande d'accès au bus de sortie, lorsque ledit bus est libre, sur un des M fils du bus pendant la seconde phase dudit second signal d'horloge (CLK2), et en ce que chaque circuit de réception dans le système de commande central connecté à un fil du bus comprend :

une troisième bascule (48) ayant une entrée connectée à la sortie de la première bascule pour mémoriser l'état de la sortie de la première bascule (TX 40) lorsque le bus est libre et fournir en sortie le bit de demande d'accès de l'unité associée du premier groupe, et une quatrième bascule (49) ayant une entrée connectée à la sortie de la seconde bascule (TY41) pour mémoriser l'état de la sortie de ladite seconde bascule lorsque le bus est libre et fournir en sortie le bit de demande d'accès de l'unité associé du second groupe.

3. Dispositif selon l'une des revendications 1 ou 2 caractérisé en ce que dans chaque circuit de réception :

la première bascule a une première entrée d'horloge (32) recevant le premier signal d'horloge (CLK1) pour que la sortie de ladite bascule prenne le niveau du train de bits d'entrée au front montant dudit signal et une seconde entrée d'horloge (33) recevant l'inverse ($\overline{CLK1}$) dudit premier signal d'horloge pour restaurer ladite bascule au front montant dudit signal d'horloge inversé, la seconde bascule a une première entrée d'horloge (35) recevant l'inverse (CLK1) du premier signal d'horloge pour que la sortie de ladite bascule prenne le niveau du train de bits d'entrée au front montant dudit signal inversé (CLK1) et une seconde entrée d'horloge (36) recevant ledit premier signal d'horloge pour restaurer ladite bascule au front montant dudit signal d'horloge.

**Patentansprüche**

1. Schnittstellenvorrichtung für ein Datenverarbeitungssystem, in dem 2 M Datenverarbeitungseinheiten Zugang zu einem Ausgangsbus erhalten können, wenn sie den Zugang zum Bus anfordern, um über den Ausgangsbus an ein zentrales Verarbeitungssystem angeschlossen zu werden, das mindestens M Drähte enthält, die der Aussendung von Informationsbitgruppen zwischen den Datenverarbeitungseinheiten und dem zentralen Steuersystem zugeordnet sind und in dem die 2M Datenverarbeitungseinheiten an das zentrale Verarbeitungsnetz mit einem Eingangsbus angeschlossen sind, der mindestens M Drähte enthält, um vom besagten System Informationsbitgruppen aufzunehmen, die auf den Drähten synchron befördert werden und die durch einen oberen oder einen unteren Pegel innerhalb einer jeden Bit-Periode dargestellt sind, wobei die besagte Vorrichtung dadurch gekennzeichnet ist, dass :

jede Einheit eine Empfangsschaltung enthält, die an jeden Draht des Eingangsbus angeschlossen ist, um die Bits des zentralen Steuersystems aufzunehmen, und das zentrale Steuersystem mindestens M Empfangskreise enthält, von denen jeder an einen Ausgangsbus angeschlossen ist, um die Bits von den Datenverarbeitungseinheiten zu empfangen; und dadurch, dass jede Empfangsschaltung umfasst :

ein erstes Kipp (TX30), das an einem Dateneingang die Bitfolge empfängt, die vom Bus ankommt, und einen Ausgang besitzt, der das Niveau der Eingangsbitfolge an der Anstiegsflanke eines ersten Taktsignals (CLK1) aufnimmt, dessen Periode das Doppelte der Bitperiode beträgt, wobei das besagte Kipp bei der Abstiegsflanke des besagten ersten Taktsignals aufgefrischt wird, und ein zweites Kipp (TY31), das an einem Dateneingang die Bitfolge empfängt, die vom Bus ankommt, und einen Ausgang besitzt, der den Pegel der Eingangsbitfolge mit abfallender Flanke des ersten Taktsignals (CLK1) aufnimmt, wobei das besagte Kipp an der Anstiegsflanke des besagten Taktsignals aufgefrischt wird,

eine ODER-Schaltung (37), deren Eingänge an die Ausgänge des ersten und des zweiten Kipps angeschlossen sind, die am Ausgang die Bitfolge liefert, die in den Einheiten oder im zentralen Steuersystem verarbeitet werden können.

2. Busschnittstellenvorrichtung gemäss Anspruch 1, dadurch gekennzeichnet, dass

die besagten Einheiten (U-i) in eine erste und eine zweite Gruppe von M Einheiten unterteilt sind (Gruppen 0 und 1), wobei jede der M Einheiten der ersten Gruppe ihre Zugangsanforderungsbits an den Bus aussendet, wenn der besagte Bus an einem der M Busdrähte frei ist, während einer ersten Phase eines zweiten Taktsignals (CLK2) der gleichen Periode wie das erste Taktsignal und gegenüber diesem Signal (CLK1) um $\pi/2$ phasenverschoben, und jede der M Einheiten der zweiten Gruppe seine Zugangsanforderungsbits an den Ausgangsbus sendet, wenn besagter Bus frei ist, an einem der M Drähte des Bus, während der zweiten Phase des besagten zweiten Taktsignals (CLK2), und dadurch, dass :

jeder Empfangskreis im an einen Draht des Bus angeschlossenen zentralen Steuersystem enthält:

ein drittes Kipp (48) mit einem Eingang, der an den Ausgang eines ersten Kipp angeschlossen ist, um den Ausgangszustand des ersten Kipps (TX 40) zu speichern, wenn der besagte Bus frei ist, und am Ausgang das Zugangsanforderungsbit der zugeordneten Einheit der ersten Gruppe abzugeben, und

ein viertes Kipp (48) mit einem Eingang, der an den Ausgang des ersten Kipps (TY41) angeschlossen ist, um den Ausgangszustand des besagten zweiten Kipps aufzuzeichnent, wenn der besagte Bus frei ist, und am Ausgang das Zugangsanforderungsbit der zugeordneten Einheit der zweiten Gruppe abzugeben.

3. Vorrichtung gemäss einem der Ansprüche 1 oder 2, dadurch gekennzeichnet, dass in jedem Empfangskreis :

das erste Kipp einen ersten Taktsignaleingang (32) hat, der das erste Taktsignal (CLK1) empfängt, damit der Ausgang des besagten Kipps den Pegel der Eingangsbitfolge an der Anstiegsflanke des besagten Signals annimmt, und einen zweiten Taktsignaleingang (33), der den Kehrwert (CLK1) des besagten ersten Taktsignals empfängt, um das besagte Kipp an der Anstiegsflanke des besagten umgekehrten Taktsignals wieder aufzufrischen,

das zweite Kipp einen ersten Taktsignaleingang (35) hat, der den Kehrwert (CLK1) des ersten Taktsignals empfängt, damit der Ausgang des besagten Kipps den Pegel der Eingangsbitfolge an der Anstiegsflanke des besagten umgekehrten Signals (CLK1) annimmt, und einen zweiten Taktsignaleingang (36), der das besagte erste Taktsignal aufnimmt, um besagtes Kipp an der Anstiegsflanke des besagten Taktsignals wieder aufzufrischen.

**Claims**

1. A bus interface device for a data processing system wherein 2M data processing units may request access to an output bus in order to be connected to a central processing system, said output bus comprising at least M lines over which bytes of information bits can be exchanged between the data processing units and the central control system and wherein the 2M data processing units are connected to the central processing system via an input bus comprising at least M lines for receiving from said system bytes of information bits, with the information bits being sent over the lines in a synchronous manner and being represented either by a high level or by a low level during each bit period, said device being characterized in that:

each unit includes a receiving circuit connected to each input bus line for receiving the bits from the central control system, which control system comprises at least M receiving circuits connected each to an output bus for receiving the bits from the data processing units; and in that each receiving circuit includes:

a first flip-flop (TX30) having a data input to which the train of bits received from the bus is applied, and an output which assumes the level of the train of input bits at the up-going transition of a first clock signal (CLK1) the period of which is equal to twice the bit period, said flip-flop being restored at the down-going transition of said first clock signal, and a second flip-flop (TY31) having a data input to which the train of bits received from the bus is applied, and an output which assumes the level of the train of input bits at the down-going transition of the first clock signal (CLK1), said flip-flop being restored at the up-going transition of said clock signal, an OR circuit (37) having its inputs connected to the outputs of the first and second flip-flops and supplying at its output the train of bits that can be processed in said units or in said central control system.

2. A bus interface device according to claim 1, characterized in that:

said units (U-i) comprise a first and a second groups (groups 0 and 1) of M units, each of the M units in the first group sending its Request Bus bits, when the bus is free, over one of the M lines of the bus during a first phase of a second clock signal (CLK2) having the same period as the first clock signal (CLK1) and differing in phase therefrom by $\pi/2$, and each of the M units in the second group sending its Request Bus bits to the output bus, when said bus is free, over one of the M lines thereof during the second phase of said second clock signal (CLK2); and in that:

each receiving circuit in the central control system, connected to a respective one of the lines of the bus includes:

a third flip-flop (48) having an input connected to the output of the first flip-flop (TX40) for storing the state of said output when the bus is free and for supplying at its output the Request Bus bit from the associated unit in the first group, and a fourth flip-flop (49) having an input connected to the output of the second flip-flop (TY41) for storing the state of said output when the bus is free and for supplying at its output the Request Bus bit from the associated unit in the second group.

3. A device according to claim 1 or 2, characterized in that, in each receiving circuit:

the first flip-flop has a first clock input (32) that receives the first clock signal (CLK1) for causing the output of said flip-flop to assume the level of the train of input bits at the up-going transition of said signal, and a second clock input (33) that receives the inverse ($\overline{CLK1}$) of said first clock signal for restoring said flip-flop at the up-going transition of said inverted clock signal, the second flip-flop has a first clock input (35) that receives the inverse (CLK1) of the first clock signal for causing the output of said flip-flop to assume the level of the train of input bits at the up-going transition of said inverted signal (CLK1), and a second clock input (36) that receives said first clock signal for restoring said flip-flop at the up-going transition of said clock signal.

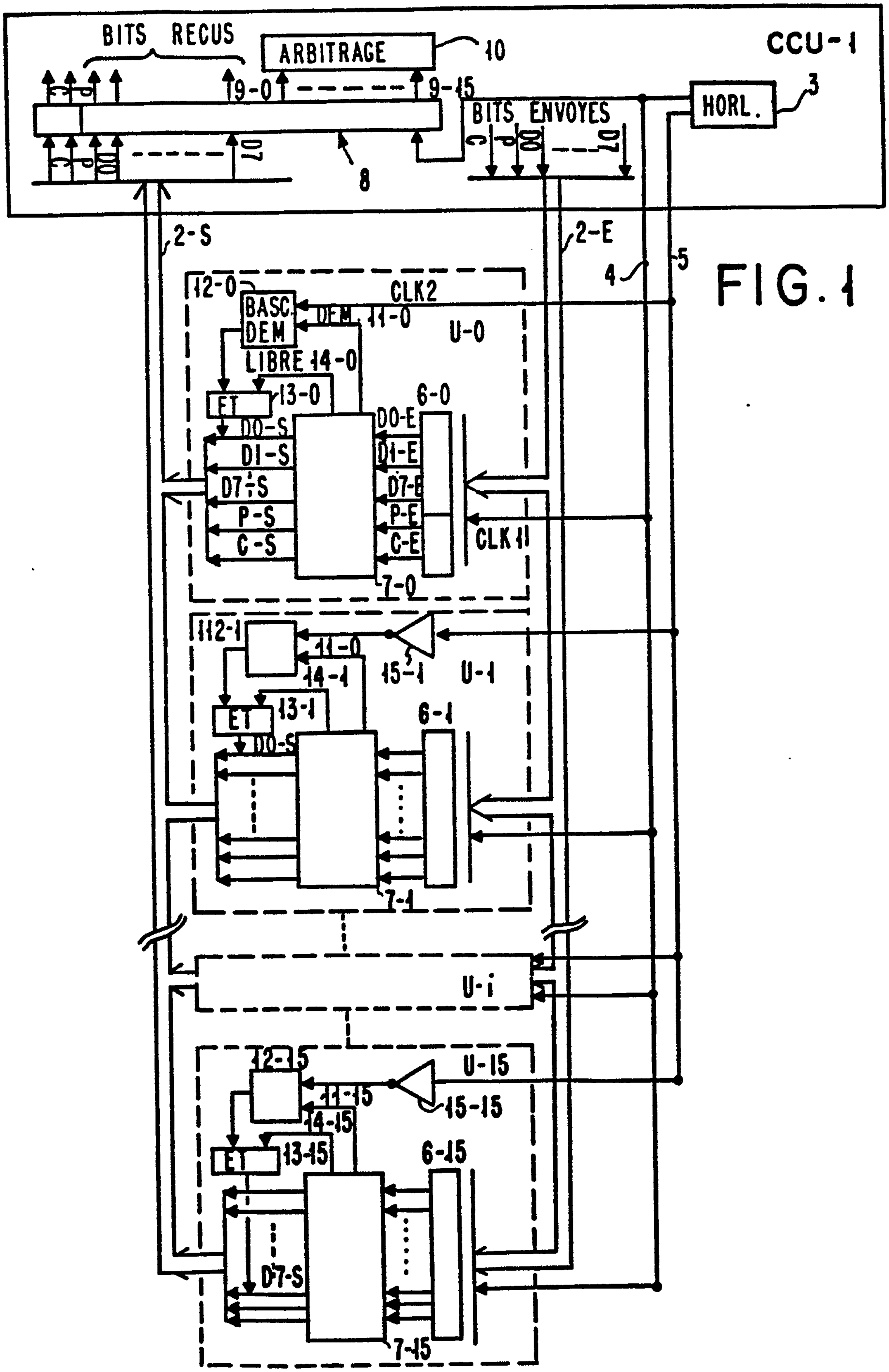
BITS RECUS
ARBITRAGE
10
CCU-1
9-0
9-15
HORL.
3
BITS ENVOYES
C P D0 D7
8
2-S
2-E
4
5
12-0
CLK2
BASC. DEM
DEM. 11-0
U-0
LIBRE 14-0
ET
13-0
6-0
D0-S
D1-S
D7-S
P-S
C-S
D0-E
D1-E
D7-E
P-E
C-E
CLK1
7-0
12-1
11-0
14-1
15-1
U-1
ET
13-1
6-1
D0-S
7-1
U-i
12-15
U-15
11-15
15-15
14-15
ET
13-15
6-15
D7-S
7-15

FIG. 1

FIG. 3

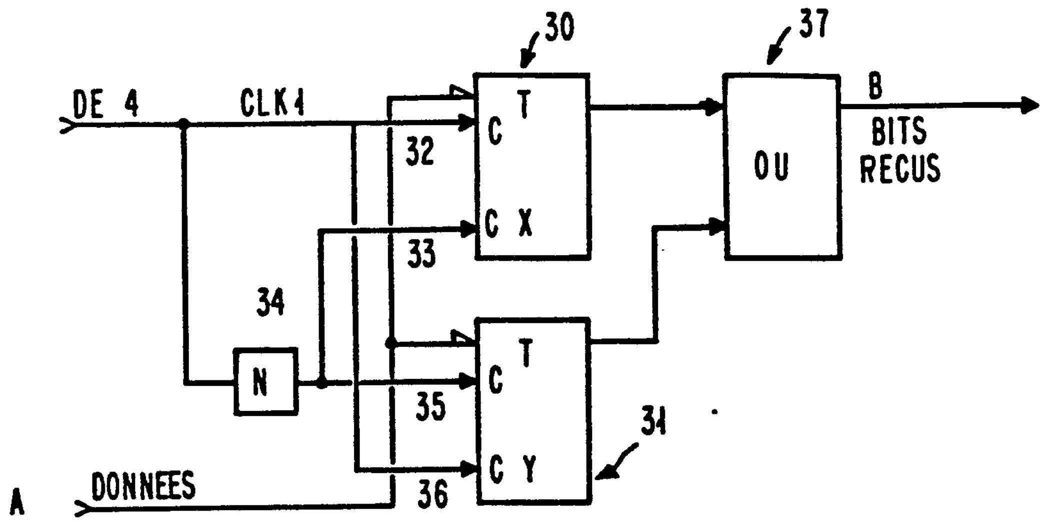
30
37
DE 4
CLK 1
T
C
C X
B
OU
BITS
RECUS
32
33
34
N
T
C
35
31
C Y
A
DONNEES
36

FIG. 2

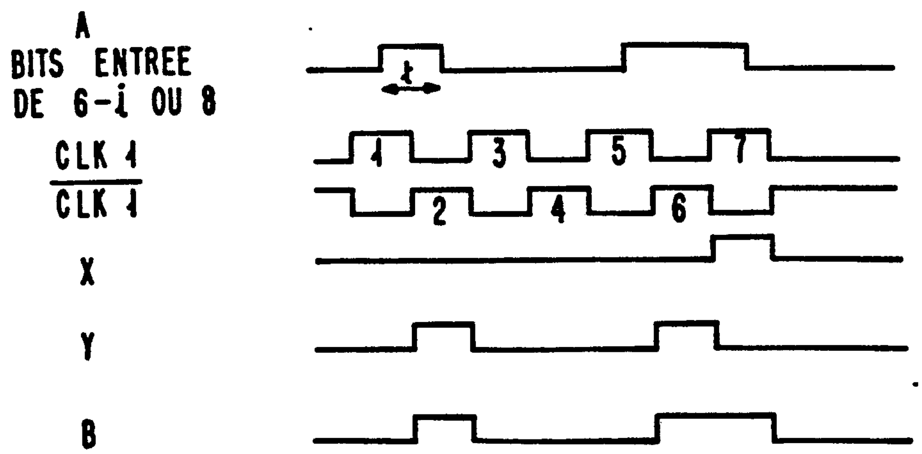
A
BITS ENTREE
DE 6-i OU 8
CLK 1
CLK 1
X
Y
B
t
1
3
5
7
2
4
6

FIG. 4

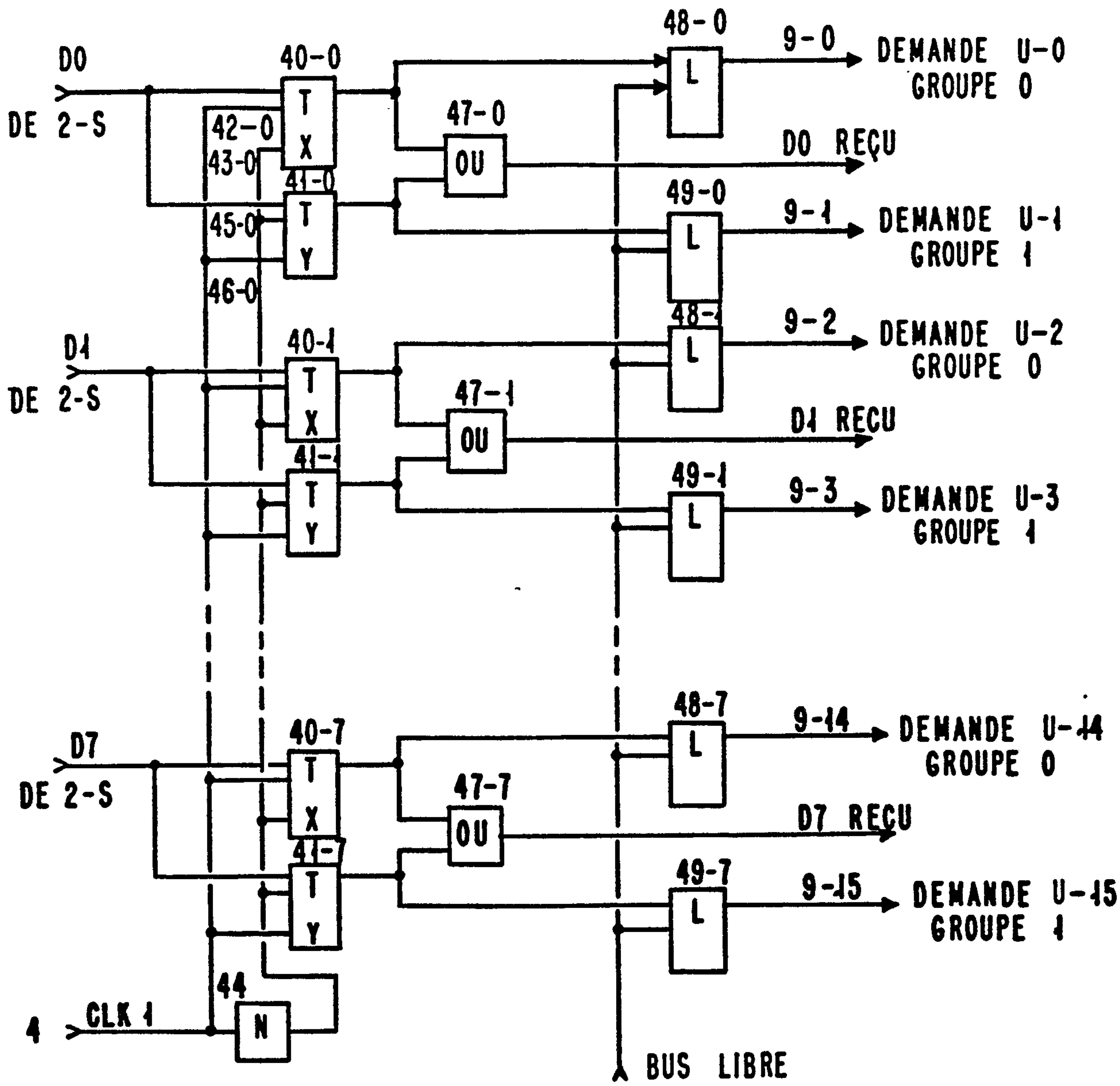
D0
DE 2-S
40-0
T
X
42-0
43-0
41-0
T
Y
45-0
46-0
47-0
OU
48-0
L
9-0
DEMANDE U-0
GROUPE 0
D0 REÇU
49-0
L
9-1
DEMANDE U-1
GROUPE 1
D1
DE 2-S
40-1
41-1
47-1
48-1
9-2
DEMANDE U-2
GROUPE 0
D1 REÇU
49-1
9-3
DEMANDE U-3
GROUPE 1
D7
DE 2-S
40-7
41-7
47-7
48-7
9-14
DEMANDE U-14
GROUPE 0
D7 REÇU
49-7
9-15
DEMANDE U-15
GROUPE 1
4
CLK 1
44
N
BUS LIBRE

FIG. 5

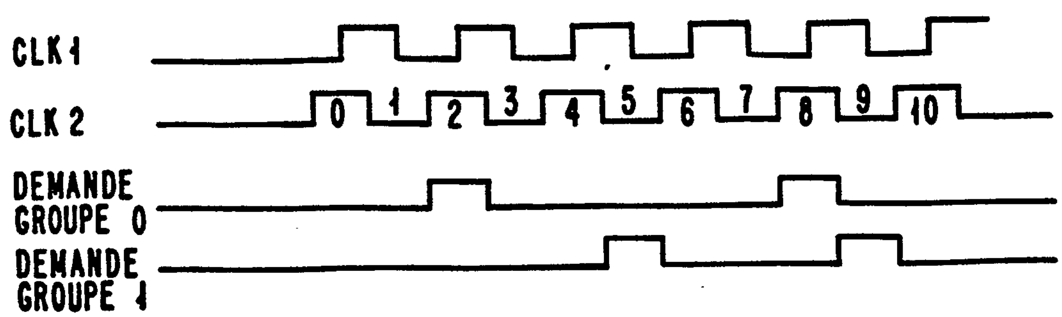
CLK 1
CLK 2
0
1
2
3
4
5
6
7
8
9
10
DEMANDE GROUPE 0
DEMANDE GROUPE 1